# EUROPÄISCHE PATENTSCHRIFT

(11) **EP 2 709 437 B1**
(45) Veröffentlichungstag und Bekanntmachung des Hinweises auf die Patenterteilung: **18.04.2018**
(21) Anmeldenummer: 11720500.5
(22) Anmeldetag: 19.05.2011
(51) Int. Cl.: A01G 27/04

(54) **BEWÄSSERUNGSEINRICHTUNG MIT EINER KAPILLAR-WASSERTRANSPORTLEITUNG**
WATERING DEVICE COMPRISING A CAPILLARY WATER TRANSPORT LINE
SYSTÈME D'ARROSAGE COMPORTANT UNE CONDUITE D'EAU À CAPILLARITÉ

(43) Veröffentlichungstag der Anmeldung: 26.03.2014
(73) Patentinhaber: HUSQVARNA AB, 561 82 Huskvarna (SE)
(72) Erfinder: CLAUS, Ralf, 89171 Illerkirchberg (DE); RENNER, Thomas, 89079 Ulm (DE)
(74) Vertreter: Finkele, Rolf
(86) Internationale Anmeldenummer: PCT/EP2011/058149
(87) Internationale Veröffentlichungsnummer: WO 2012/155978

(56) Entgegenhaltungen:
- AU-A- 4 553 385
- DE-A1- 2 140 973
- DE-B- 1 064 281
- FR-A1- 2 739 252
- FR-A5- 2 151 508
- GB-A- 2 444 141

## Beschreibung

Die Erfindung betrifft eine Bewässerungseinrichtung, insbesondere nach Art einer Topfpflanzenbewässerung, mit einer Kapillar-Wasertransportleitung.

Für die Bewässerung von Topfpflanzen sind Bewässerungseinrichtungen bekannt, bei welchen wenigstens ein Strang aus faserigem Material als Wassertransportleitung zwischen einem Vorratsbehälter und einem Erdsubstrat um die zu bewässernde Pflanze verläuft. Durch den Kapillareffekt innerhalb des faserigen Materials wird mit geringer Fließrate Wasser aus dem Vorratsbehälter über den Strang aus faserigem Material zu dem Erdsubstrat transportiert, insbesondere zumindest abschnittsweise auch entgegen der Schwerkraft. Als faseriges Material dienen beispielsweise Wollfäden oder andere organische Fasern, aber auch Kunststofffasern gebräuchlich. Der Strang aus faserigem Material kann von einem wasserdichten Schlauch umschlossen sein.
In der DE 1064281 B ist eine Bewässerungseinrichtung beschrieben, bei welcher eine Topfstütze in einem flächig größeren Wasservorratsbehälter gestellt ist. Bei einer aus der US 4339891 bekannten Anordnung ist eine obere Öffnung eines Wasservorratsbehälters durch eine in dem Behälter eingesetzte Stützplatte abgedeckt.
Aus der GB 2 444 141 A ist eine Bewässerungsvorrichtung umfassend einen Wasservorratsbehälter und eine von diesem wegführende Kapillar-Wassertransportleitung bekannt. Hierbei findet sich über dem Wasservorratsbehälter eine Abdeckung die eine Stützfläche für ein Pflanzgefäß bildet.

Der vorliegenden Erfindung liegt die Aufgabe zugrunde, eine vorteilhaft handhabbare derartige Bewässerungseinrichtung anzugeben.

Die Erfindung ist im unabhängigen Anspruch beschrieben. Die abhängigen Ansprüche enthalten vorteilhafte Ausgestaltungen und Weiterbildungen der Erfindung.

Die haubenförmige Abdeckung über dem Wasserbehälter ermöglicht vorteilhafterweise die Optimierung von Wasservorratsbehälter und Abdeckung nach dem jeweils von diesen Bauteilen vorrangig zu erfüllenden Aufgaben.

Insbesondere kann die Abdeckung für Licht nicht transparent ausgeführt sein, wodurch in dem abgedeckten Wasservorratsbehälter das Algenwachstum weitgehend unterbunden ist. Zugleich kann der Wasservorratsbehälter zumindest an einem Kontrollbereich transparent ausgeführt sein, um visuell eine einfache und schnelle Füllstandskontrolle ohne zusätzliche Bauteile vornehmen zu können. Vorzugsweise ist der Wasservorratsbehälter durch einen materialhomogenen Kunststoff-Spritzgusskörper aus transparentem Kunststoffmaterial gebildet.
Der Kontrollbereich des Wasservorratsbehälters ist vorzugsweise durch eine Aussparung in der Seitenwand der Abdeckung zur visuellen Füllstandskontrolle zugänglich. Der Kontrollbereich kann in bevorzugter Ausführung durch einen an der Aussparung der Seitenwand gegen die Seitenwand nach außen ragenden Vorsprung des Wasservorratsbehälters gegeben sein, welcher vorteilhafterweise eine obere Öffnung aufweist, durch welche Wasser in den Wasservorratsbehälter nachfüllbar ist, ohne die Lage der Abdeckung oder eines auf dieser abgestützten Pflanzgefäßes zu verändern. Die Befüllöffnung kann vorteilhafterweise durch einen manuell werkzeuglos beweglichen Deckel verschließbar sein.

An der dem Wasservorratsbehälter zuweisenden Unterseite der Abdeckung kann vorteilhafterweise eine Fixiereinrichtung zur Festlegung einer mit einem Ende in den Wasserbehälter ragenden Kapillar-Wassertransportleitung vorgesehen sein, deren entgegen gesetztes Ende mit einem Erdsubstrat in einem auf der Abdeckung aufgestellten Pflanzgefäß wasserabgebend in Verbindung steht. Die Fixierung der Wasser-Transportleitung bei ihrem in den Wasservorrat des Wasservorratsbehälters ragenden Ende gewährleistet eine zuverlässige Positionierung des Leitungsendes im Vorratsbehälter und ermöglicht vorteilhafterweise ein Abheben der Abdeckung samt Pflanzgefäß von dem Vorratsbehälter, ohne die Leitung von der Fixiereinrichtung und/oder dem Erdsubstrat zu lösen.

Die Abdeckung ist vorteilhafterweise innerhalb der Fläche der Vertikalprojektion des Wasservorratsbehälters vertikal abgestützt, wofür Stützmittel vorteilhafterweise zwischen der Unterseite der Stützfläche und dem Boden des Wasserbehälters angeordnet sind. Die Stützmittel sind vorteilhafterweise an der Unterseite der Stützfläche der Abdeckung mit dieser verbunden und können in bevorzugter Ausführung zumindest teilweise baulich mit der Fixiereinrichtung vereinigt sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Topf-Bewässerungseinrichtung,
- Fig. 2: die Bewässerungseinrichtung nach Fig. 1 bei vom Wasservorratsbehälter abgehobener Abdeckung,
- Fig. 3: eine Füllöffnung des Wasservorratsbehälters,
- Fig. 4: eine vergrößerte Darstellung einer Fixiereinrichtung.

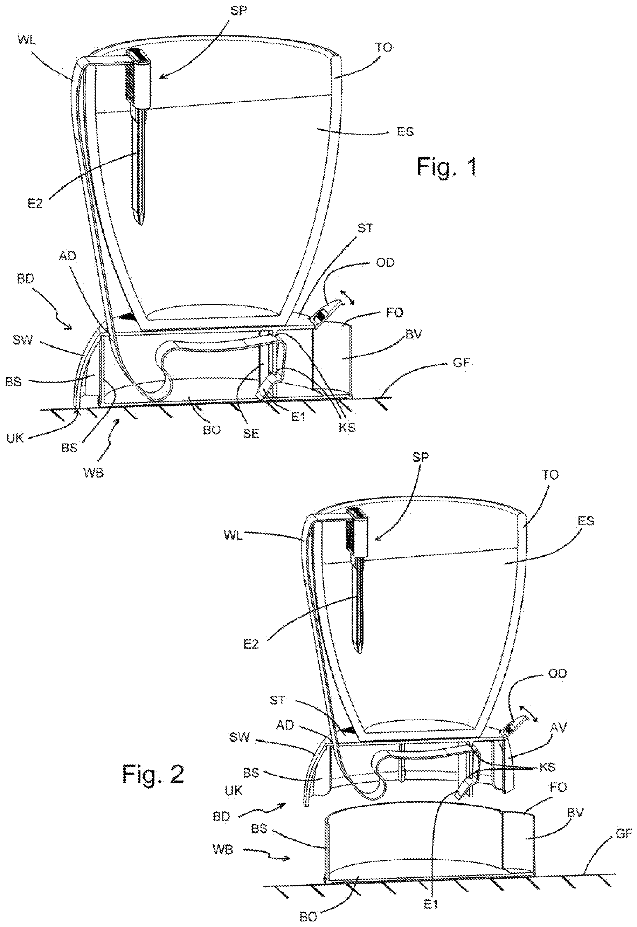

Fig. 1 zeigt eine Pflanzenbewässerungseinrichtung mit einem Topf TO als Pflanzgefäß, welches mit einem Erdsubstrat ES befüllt ist. Eine zu bewässernde Pflanze ist der Übersichtlichkeit halber nicht mit eingezeichnet. Fig. 1 ist als Schnittdarstellung mit einer durch die vertikale Mittelachse des Topfes TO verlaufenden Schnittebene dargestellt.

Der Topf TO steht auf der Stützfläche ST einer haubenförmigen Abdeckung BD auf, welche über einem Wasserbehälter WB angeordnet ist und diesen überdeckt. Die Abdeckung BD weist einen von der Stützfläche ST nach unten verlaufenden Seitenwandbereich SW auf, welcher sich mit einer Unterkante UK auf einer Grundfläche GF als Aufstellfläche GF abstützt.

Der Wasservorratsbehälter WB steht gleichfalls auf der Grundfläche GF auf und reicht mit der Oberkante einer das Befüllvolumen begrenzenden Seitenwand BS bis an oder knapp unter die Unterseite der Stützfläche ST der Abdeckung. Die Abdeckung kann alternativ zur Abstützung über die Unterkante UK auf der Grundfläche GF auch an dem Wasservorratsbehälter, beispielsweise über die Unterseite der Stützfläche ST an der Oberkante der Seitenwand BS des Wasservorratsbehälters abgestützt sein. Der Wasservorratsbehälter ist nach unten durch eine Bodenfläche BO abgeschlossen.

Mit der haubenförmigen Abdeckung BD, insbesondere von der Unterseite der Stützfläche ST nach unten in das Füllvolumen des Wasservorratsbehälters ragend ist eine Fixiereinrichtung vorgesehen, an welcher ein dem Vorratsbehälter zuweisendes erstes Ende E1 einer Wassertransportleitung WL festgelegt werden kann. Die Wassertransportleitung WL enthält in bevorzugter Ausführung ein faseriges Material, welches von einer wasserdichten Hülle umgeben ist. In der dargestellten vorteilhaften Ausführungsform sind faseriges Material, welches am Ende E1 über die wasserdichte Hülle hinaus steht, sowie die wasserdichte Hülle selbst bandförmig flach ausgeführt. An dem dem Wasserbehälter abgewandten Ende E2 der Wassertransportleitung ist ein Erdspieß SP angeordnet, welcher mit einem Einsteckteil in das Erdsubstrat ES einsteckbar ist, wobei ein von der wasserdichten Hülle freier Endbereich des bandförmigen faserigen Materials mit dem Erdsubstrat ES in wasserabgebenden Kontakt gebracht ist. Durch die Wirkung des für derartige Bewässerungseinrichtungen an sich bekannten Kapillareffekts innerhalb des faserigen Materials wird Wasser auch entgegen der Schwerkraft von dem Wasservorratsbehälter über die Wassertransportleitung WL bis in das Erdsubstrat ES transportiert.

Die Fixiereinrichtung an der haubenförmigen Abdeckung weist vorteilhafterweise Klemmstrukturen KS auf, durch welche die bandförmige Wassertransportleitung in Form einer Schleife hindurchgeführt ist. Die Wassertransportleitung ist durch eine Aussparung AD in der Abdeckung, insbesondere im Randbereich der Stützfläche ST, durch die Abdeckung hindurch geführt. Die Aussparung AD kann vorteilhafterweise trichterförmig erweitert sein, um die Einführung einer Wassertransportleitung in die Aussparung zu erleichtern. Durch die Fixierung der Wassertransportleitung in den Klemmstrukturen KS der Fixiereinrichtung wird vermieden, dass sich das Ende E1 bei versehentlichem Zug eines Benutzers an der Wassertransportleitung unzulässig aus dem bodennahen Bereich des Wasservorratsbehälters entfernt. Die Fixiereinrichtung ist vorteilhafterweise so ausgeführt, dass eine ordnungsgemäß in die Fixierreinrichtung eingesetzte Wassertransportleitung mit dem Ende E1 in der Nähe des Bodens des Wasservorratsbehälters festgelegt ist und dadurch eine Wasserversorgung der Pflanze auch bei niedrigem Wasserstand im Wasservorratsbehälter gewährleistet ist.

Durch die Anordnung der Fixiereinrichtung an der haubenförmigen Abdeckung kann die Abdeckung samt Pflanzgefäß von dem Wasservorratsbehälter abgehoben werden, wie in Fig. 2 dargestellt, ohne dass das Ende E1 der Wassertransportleitung von der Fixiereinrichtung oder das Ende E2 der Wassertransportleitung aus dem Erdsubstrat ES gelöst werden muss. Ein Abheben der Abdeckung BD von dem Wasservorratsbehälter WB kann insbesondere zur Reinigung des Wasservorratsbehälters erforderlich sein. Der Wasservorratsbehälter kann auch über manuell lösbare Haltestrukturen an der Abdeckung gehalten und dadurch wahlweise mit dieser transportiert oder von dieser gelöst werden. Ferner kann vorgesehen sein, dass die Abdeckung in Form eines Übertopfes über die Stützfläche nach oben fortgesetzt ist. Die Wassertransportleitung kann dann vorteilhafterweise innerhalb eines solchen Übertopfes, vorzugsweise zwischen Übertopf und in diesem eingesetztem Pflanzgefäß verlaufen.

Die haubenförmige Abdeckung kann beispielsweise über Zentrierstege ZS und/oder andere Strukturen relativ zu dem Wasservorratsbehälter in zentrierter Position gesichert sein. Die radial von der Innenfläche der Seitenwand SW der haubenförmigen Abdeckung BD nach innen ragenden Zentrierstege dienen vorteilhafterweise zugleich zur mechanischen Stabilisierung der Seitenwand SW, wenn diese in der bevorzugten Ausführung die Abdeckung über die Unterkante UK auf der Grundfläche GF stützt. Zentriereinrichtungen können auch an dem Wasservorratsbehälter ausgebildet sein.

Eine weitere mechanische Abstützung kann vorteilhafterweise durch ein oder mehrere Stützelemente SE einer Stützeinrichtung gegeben sein, welche zwischen der Unterseite der Stützfläche ST und dem Boden BO des Wasservorratsbehälters innerhalb des Füllvolumens des Wasserbehälters angeordnet sein können. Im vorliegenden Fall ist das Stützelement SE zugleich als die Fixiereinrichtung für das Ende E1 der Wassertransportleitung ausgebildet. Das Stützelement SE ragt in vorteilhafter Ausführung bei nicht durch ein Pflanzgefäß belasteter Stützfläche ST vorteilhafterweise bis auf einen verbleibenden geringen Spalt nahe an die Oberseite der Bodenfläche BO des Wasservorratsbehälters heran. Bei Gewichtsbelastung der Stützfläche ST durch ein gefülltes Pflanzgefäß kann sich die haubenförmige Abdeckung elastisch verformen und das Stützelement SE drückt auf die Bodenfläche BO, welche wiederum die Kraft auf die Grundfläche GF überträgt, so dass die Stützfläche ST nicht nur entlang ihres Randes, sondern vorteilhafterweise auch an einer oder mehreren vom Rand weiter beabstandeten Positionen mittelbar gegen die Grundfläche GF abgestützt ist.

Die Seitenwand SW weist eine Aussparung AV auf, in welcher die Seitenwand in Umfangsrichtung unterbrochen ist. Hierzu korrespondierend weist der Wasservorratsbehälter WB gegenüber einer ansonsten vorzugsweise in vertikaler Projektion der Kanten der Abdeckung folgenden, insbesondere kreisrunden Kontur einen radial nach außen ragenden Vorsprung BV auf, welcher durch die Aussparung AV in der Seitenwand SW der haubenförmigen Abdeckung nach außen ragt. Der Vorsprung BV ist, wie vorzugsweise auch der übrige Bereich des Wasservorratsbehälters, nach oben offen und weist an seiner oben offenen Seite eine Füllöffnung FO auf. Diese Füllöffnung ist durch einen Deckel OD an der haubenförmigen Abdeckung verschließbar. Der Deckel OD ist, wie in Fig. 1 durch den Doppelpfeil angedeutet, relativ zu der Füllöffnung FO verlagerbar und kann insbesondere um eine zur Stützfläche ST parallele Schwenkachse verschwenkbar sein. Der Deckel OD kann als eigenständiges Bauteil hergestellt und mit der Abdeckung BD verbunden sein. In bevorzugter Ausführung ist der Deckel OD zusammen mit der haubenförmigen Abdeckung über ein Kunststoff-Filmscharnier verbunden, so dass Deckel OD und haubenförmige Abdeckung BD in einem Spritzgussvorgang als ein einheitlicher Spritzgusskörper hergestellt werden können. Durch das Verschließen der Füllöffnung FO mittels des Deckels OD kann zum einen das Eindringen von Schmutz oder Insekten in den Wasservorratsbehälter vermieden und zum anderen die Verdunstung aus dem Wasservorratsbehälter besonders gering gehalten werden.

Zur Verminderung der Verdunstung kann auch vorgesehen sein, dass zwischen der Oberkante der Wand BS des Vorratsbehälters und der haubenförmigen Abdeckung eine elastische Dichtung eingefügt ist.

Der Wasservorratsbehälter besteht vorteilhafterweise zumindest in seinem radial nach außen ragenden Vorsprung BV, vorzugsweise materialhomogen vollständig aus einem transparenten Kunststoffmaterial. Hierdurch ist ohne zusätzliche Bauteile und ohne Öffnen des Deckels OD eine visuelle Kontrolle des Füllstands in dem Wasservorratsbehälter durch den Benutzer möglich.

Die Abdeckung BD besteht vorteilhafterweise aus einem nicht transparenten Material, so dass bei regulärem Betrieb der Bewässerungseinheit in durch die Abdeckung BD abgedecktem Wasserbehälter nach Fig. 1 kaum Licht in den Wasservorratsbehälter gelangen kann und deshalb Algenwachstum im Vorratsbehälter besonders gering gehalten werden kann.

Zur weiteren Verringerung des Lichteinfalls kann der Vorsprung BV in Richtung des Wasserbehälters durch eine Trennwand mit einer bodenseitigen Öffnung vom Hauptvolumen des Wasservorratsbehälters abgetrennt sein, wobei die bodenseitige Öffnung gewährleistet, dass nach dem Prinzip kommunizierender Röhren der am Vorsprung BV visuell erkennbare Füllstand immer mit dem Füllstand im Wasservorratsbehälter übereinstimmt. Auch eine Befüllung des Wasservorratsbehälters über die Füllöffnung EFO ist dann unverändert möglich, ohne die haubenförmige Abdeckung zu entfernen. Eine solche Trennwand kann insbesondere als ein von der Unterseite der Stützfläche nach unten ragender Wandabschnitt ausgeführt sein.

Bei der bevorzugten, nicht transparenten Abdeckung des Wasservorratsbehälters erweist sich die Fixierung der Wassertransportleitung gegen Zugkräfte als besonders vorteilhaft, da eine die Bewässerung störende versehentliche Verlagerung des Endes E1 der Wassertransportleitung bei nicht transparenter Abdeckung für den Benutzer nicht erkennbar ist.

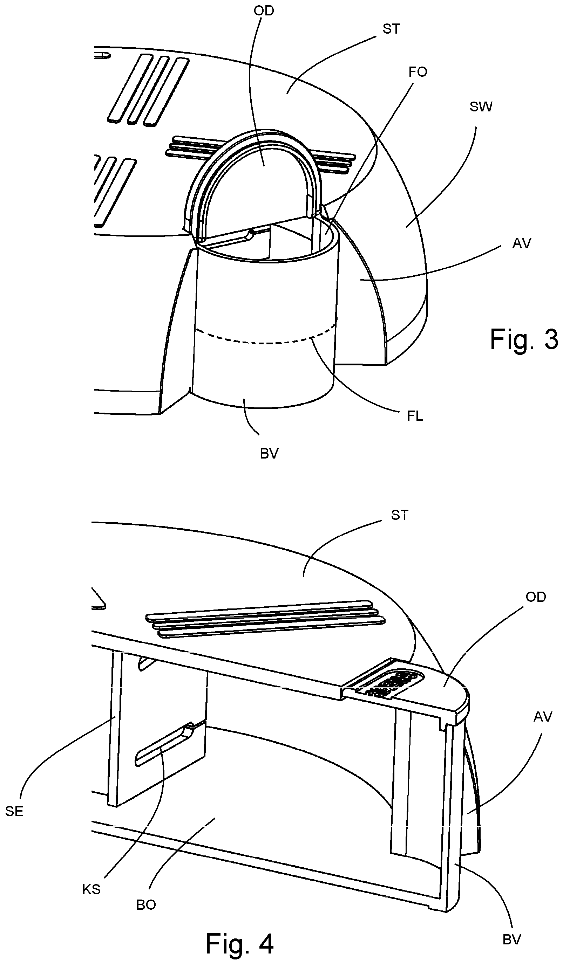

Fig. 3 zeigt in gegenüber Fig. 1 und Fig. 2 vergrößerter Darstellung den die Füllöffnung FO bildenden Vorsprung BV des Wasservorratsbehälters bei auf den Wasservorratsbehälter aufgesetzter Abdeckung BD. Der gelenkig an der Abdeckung gehaltene Deckel OD ist in aufgerichteter Stellung dargestellt, in welcher die Füllöffnung FO frei gegeben ist. Der Vorsprung BV des Wasserbehälters ist von Wandflächen AV der Aussparung in der Seitenwand SW der Abdeckung seitlich umgeben. Der Vorsprung BV und vorzugsweise der gesamte Wasservorratsbehälter besteht aus transparentem Material, so dass an dem Vorsprung BV der aktuelle Wasserstand als mit unterbrochener Linie eingetragene Fülllinie für den Benutzer erkennbar ist.

Fig. 4 zeigt in gegenüber Fig. 1 und Fig. 2 vergrößerter Darstellung ausschnittsweise einen Blick in das Innere des Wasservorratsbehälters bei auf diesen aufgesetzter Abdeckung, wobei in Fig. 4 kein Wasser im Vorratsbehälter dargestellt ist und auch das Band aus faserigem Material weg gelassen ist. Die Stützeinrichtung SE steht auf dem Boden BO des Wasservorratsbehälters auf. Die Stützeinrichtung SE mit einem von der Unterseite der Stellfläche ST der Abdeckung nach unten ragenden Steg bildet mit diesem Steg vorteilhafterweise zugleich eine Klemmeinrichtung für das Band aus faserigem Material, wobei eine Klemmstruktur KS in Form einer länglichen Aussparung durch einen einseitig bis zur Außenkante des Stegs reichenden Schlitz elastisch aufweitbar ist, um die Durchführung des Bandes aus faserigem Material zu vereinfachen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Bewässerungseinrichtung mit einem Wasservorratsbehälter und einer von diesem Weg führenden Kapillar-Wassertransportleitung (WL),
wobei eine Abdeckung (BD) über dem Wasservorratsbehälter (WB) haubenförmig mit einer den Wasservorratsbehälter umgebenden Seitenwand (SW) eine Stützfläche (ST) für ein Pflanzgefäß (TO) bildet,
**dadurch gekennzeichnet,**
**dass** eine Fixiereinrichtung (KS) zum zugfesten Fixieren eines in den Wasservorratsbehälter ragenden Endes der Wassertransportleitung (WL) vorgesehen ist.

2. Bewässerungseinrichtung nach Anspruch 1, **dadurch gekennzeichnet, dass** mittels der Fixiereinrichtung (KS) ein erstes Bandende (E1) in Nähe des Bodens (BO) des Wasservorratsbehälters festlegbar ist.

3. Bewässerungseinrichtung nach Anspruch 2, **dadurch gekennzeichnet, dass** die Fixiereinrichtung (KS) an der dem Wasservorratsbehälter zugewandten Unterseite der Stützfläche (ST) der Abdeckung angeordnet ist.

4. Bewässerungseinrichtung nach Anspruch 3, **dadurch gekennzeichnet, dass** die Fixiereinrichtung in Baueinheit mit einer Stützeinrichtung (SE) zur mechanischen Abstützung der Stützfläche gegen den Boden (BO) des Wasservorratsbehälters (WB) ausgebildet sind.

5. Bewässerungseinrichtung nach einem der vorhergehenden Ansprüche, **dadurch gekennzeichnet, dass** die haubenförmige Abdeckung (BD) aus nichttransparentem Material besteht.

6. Bewässerungseinrichtung nach Anspruch 5, **dadurch gekennzeichnet, dass** in der Seitenwand (SW) eine Aussparung (AV) vorgesehen ist.

7. Bewässerungseinrichtung nach Anspruch 6, **dadurch gekennzeichnet, dass** bei der Aussparung (AV) der Wasservorratsbehälter (WB) einen transparenten Kontrollbereich (BV) zur visuellen Füllstandskontrolle aufweist.

8. Bewässerungseinrichtung nach Anspruch 7, **dadurch gekennzeichnet, dass** der Wasservorratsbehälter (WB) aus transparentem Kunststoff besteht.

9. Bewässerungseinrichtung nach einem der Ansprüche 6 bis 8, **dadurch gekennzeichnet, dass** bei der Aussparung (AV) der Wasservorratsbehälter einen die Seitenwand (SW) seitlich überragenden Vorsprung (BV) aufweist.

10. Bewässerungseinrichtung nach Anspruch 9, **dadurch gekennzeichnet, dass** der Vorsprung (BV) nach oben eine verschließbare Befüllöffnung (FO) aufweist.

11. Bewässerungseinrichtung nach einem der Ansprüche 1 bis 10, **dadurch gekennzeichnet, dass** die Abdeckung (BD) mit einer unteren Begrenzungsebene (UK) zur eigenständigen Abstützung auf einer Grundfläche ausgebildet ist.

12. Bewässerungseinrichtung nach Anspruch 1 bis 11, **dadurch gekennzeichnet, dass** in der Abdeckung (BD), vorzugsweise in deren Stützfläche (ST) eine für die Durchführung der Wassertransportleitung ausgebildete Öffnung (AD) vorgesehen ist.

13. Bewässerungseinrichtung nach Anspruch 12, **dadurch gekennzeichnet, dass** die Öffnung trichterförmig erweitert ist.

14. Bewässerungseinrichtung nach einem der Ansprüche 1 bis 13, **dadurch gekennzeichnet, dass** die Abdeckung in Form eines Übertopfes über die Stützfläche nach oben fortgesetzt ist.

## Claims

1. Irrigation device with a water supply container and a capillary water transport line (WL) leading away therefrom, wherein a cover (BD) over the water reservoir (WB) forms hood-shaped with a side wall (SW) surrounding the water supply container and a support surface (ST) for a planter (TO),
**characterized in that**
a fixing device (KS) is provided for high-tensile fixing an end of the water transport line (WL) projecting into the water supply container.

2. Irrigation device according to claim 1, **characterized in that** by means of the fixing device (KS), a first band end (E1) in the vicinity of the bottom (BO) of the water supply container is fixable.

3. Irrigation device according to claim 2, **characterized in that** the fixing device (KS) is arranged on the underside of the support surface (ST) of the cover facing the water supply container.

4. Irrigation device according to claim 3, **characterized in that** the fixing device is formed in a physical unit with a support means (SE) for the mechanical support of the support surface against the bottom (BO) of the water supply container (WB).

5. Irrigation device according to one of the preceding claims, **characterized in that** the hood-shaped cover (BD) consists of non-transparent material.

6. Irrigation device according to claim 5, **characterized in that** in the side wall (SW) a recess (AV) is provided.

7. Irrigation device according to claim 6, **characterized in that** the water supply container (WB) has a transparent control area (BV) for visual level control in the recess (AV).

8. Irrigation device according to claim 7, **characterized in that** the water supply container (WB) consists of transparent plastic.

9. Irrigation device according to one of claims 6 to 8, **characterized in that** water supply container has, in the recess (AV), a projection (BV) laterally projecting beyond the side wall (SW).

10. Irrigation device according to claim 9, **characterized in that** the projection (BV) upwards has a closable filling opening (FO).

11. Irrigation device according to one of claims 1 to 10, **characterized in that** the cover (BD) is formed with a lower boundary plane (UK) for independent support on a base.

12. Irrigation device according to claim 1 to 11, **characterized in that** in the cover (BD), preferably in the support surface (ST) thereof an opening (AD) designed for passing the water transport line is provided.

13. Irrigation device according to claim 12, **characterized in that** the opening is widened funnel-shaped.

14. Irrigation device according to one of claims 1 to 13, **characterized in that** the cover is continued upwards over the support surface in the form of a planter.

## Revendications

1. Système d'arrosage comprenant un réservoir d'eau et une conduite d'eau à capillarité (WL) s'éloignant de celui-ci,
un élément de recouvrement (BD) en forme de capot au-dessus du réservoir d'eau (WB) formant avec une paroi latérale (SW) entourant le réservoir d'eau une surface de support (ST) pour un récipient pour plante (TO),
**caractérisé**
**en ce qu'**un dispositif de fixation (KS) est prévu pour la fixation résistante à la traction d'une extrémité de la conduite d'eau (WL) dépassant dans le réservoir d'eau.

2. Système d'arrosage selon la revendication 1, **caractérisé en ce qu'**une première extrémité de bande (E1) peut être fixée près du fond (BO) du réservoir d'eau au moyen du dispositif de fixation (KS).

3. Système d'arrosage selon la revendication 2, **caractérisé en ce que** le dispositif de fixation (KS) est disposé sur la face inférieure tournée vers le réservoir d'eau de la surface de support (ST) de l'élément de recouvrement.

4. Système d'arrosage selon la revendication 3, **caractérisé en ce que** le dispositif de fixation est formé en une unité de construction avec un dispositif de support (SE) pour le support mécanique de la surface de support contre le fond (BO) du réservoir d'eau (WB).

5. Système d'arrosage selon l'une des revendications précédentes, **caractérisé en ce que** l'élément de recouvrement (BD) en forme de capot est constitué d'un matériau non transparent.

6. Système d'arrosage selon la revendication 5, **caractérisé en ce qu'**un évidement (AV) est prévu dans la paroi latérale (SW).

7. Système d'arrosage selon la revendication 6, **caractérisé en ce que**, au niveau de l'évidement (AV), le réservoir d'eau (WB) comporte une zone de contrôle (BV) transparente pour le contrôle visuel du niveau de remplissage.

8. Système d'arrosage selon la revendication 7, **caractérisé en ce que** le réservoir d'eau (WB) est constitué de matière plastique transparente.

9. Système d'arrosage selon l'une des revendications 6 à 8, **caractérisé en ce que**, au niveau de l'évidement (AV), le réservoir d'eau comporte une saillie (BV) dépassant latéralement de la paroi latérale (SW).

10. Système d'arrosage selon la revendication 9, **caractérisé en ce que** la saillie (BV) comporte en haut une ouverture de remplissage (FO) pouvant être fermée.

11. Système d'arrosage selon l'une des revendications 1 à 10, **caractérisé en ce que** l'élément de recouvrement (BD) est formé avec un plan de délimitation inférieur (UK) pour le support autonome sur une surface de base.

12. Système d'arrosage selon les revendications 1 à 11, **caractérisé en ce qu'**une ouverture (AD) conçue pour le passage de la conduite d'eau est prévue dans l'élément de recouvrement (BD), de préférence dans sa surface de support (ST).

13. Système d'arrosage selon la revendication 12, **caractérisé en ce que** l'ouverture est élargie en entonnoir.

14. Système d'arrosage selon l'une des revendications 1 à 13, **caractérisé en ce que** l'élément de recouvrement est prolongé vers le haut au-dessus de la surface de support sous la forme d'un cache-pot.
